# EUROPÄISCHE PATENTSCHRIFT

(11) **EP 0 500 860 B1**
(45) Veröffentlichungstag und Bekanntmachung des Hinweises auf die Patenterteilung: **03.08.1994**
(21) Anmeldenummer: 91915497.1
(22) Anmeldetag: 04.09.1991
(51) Int. Cl.: G01D 5/34

(54) **VERFAHREN ZUM MESSEN VON LÄNGEN**
METHOD OF MEASURING LENGTHS
PROCEDE DE MESURE DE LONGUEURS

(30) Priorität: 07.09.1990 DD 34388290
(43) Veröffentlichungstag der Anmeldung: 02.09.1992
(73) Patentinhaber: CARL ZEISS JENA GmbH, 07745 Jena (DE)
(72) Erfinder: SCHUCHARDT, Gerd, D-6902 Jena (DE); FREITAG, Hans-Joachim, D-6900 Jena (DE)
(74) Vertreter: Geyer, Werner, Dr.-Ing.
(86) Internationale Anmeldenummer: EP9101676
(87) Internationale Veröffentlichungsnummer: WO9204601

(56) Entgegenhaltungen:
- EP-A- 0 381 918
- GB-A- 1 198 517
- US-A- 3 089 133
- US-A- 3 982 106
- US-A- 4 463 259
- Werkstattstechnik, Zeitschift für industrielle Fertigung, Bd. 61, Nr. 11, 1. November 1971, Berlin, DE, Seiten 698-703; J. Neumann: "Ein lichtelektrische Messmikroskop zum automatischen Messen des Schlittenweges an Werkzeugmaschinen"
- Sov. J. Opt. Technol., Bd 41, Nr. 8, 1. August 1974, Seiten 464-471; Pivovarova E.A.: "Photoelectric converters for measuring angular and linear displacements"

## Beschreibung

### Technisches Gebiet

Die Erfindung bezieht sich auf ein Verfahren zum Messen von Längen, bei dem ein Teilungsträger, der eine Rasterteilung mit einer Zählspur und Referenzmarken mit unterschiedlichen Abständen in mindestens einer anderen Spur aufweist, von einer Abtasteinrichtung abgetastet wird, wobei die Abtastsignale in einer Auswerteinrichtung und einer Anzeigeeinrichtung weiterverarbeitet werden, und bei dem die unterschiedlichen Abstände der Referenzmarken zueinander durch Abtasten der Rasterteilung in Zähleinheiten der Zählspur ermittelt werden, wobei aus diesen Abstandssignalen Informationen in codierter Form über die Absolutwerte der Position der Referenzmarken gewonnen werden.

Das erfindungsgemäße Verfahren ist bei translatorischen Meßsystemen anwendbar, insbesondere bei hochauflösenden Meßsystemen für große Längen an Werkzeugmaschinen sowie an Längen- und Koordinatenmeßmaschinen.

### Stand der Technik

Im Werkzeugmaschinenbau und im allgemeinen Maschinenbau werden in großem Umfang Längenmeßsysteme eingesetzt. Dabei sind grundsätzlich zwei Arten von Meßsystemen bekannt, wobei man die eine Art mit dem Begriff "Absolutwert-System" und die andere Art mit dem Begriff "Inkrementalzählsystem" bezeichnet.

Sowohl die Absolutwertsysteme (z.B. CH-A-374 207), wie auch die Inkremental-Systeme (z.B. CH-A-499 091) haben jeweils eine Reihe spezifischer Vor- und Nachteile. Es sind aber auch Meßsysteme bekannt (z.B. DE-A-2 416 212 oder DE-C-3 144 334), die mit spezifischen hybriden Lösungen die Vorteile der beiden erwähnen Meßsystem-Arten vereinen bzw. deren Nachteile vermeiden.

Bei der Längen- und Winkelmeßeinrichtung nach der DE-A-2 416 212 oder der US-A-3 982 106 wird ein Teilungsträger mit einer zweiten, zur Inkrementskala parallelen Referenzspur und identischen Referenzmarken verwendet, die auch aus einzelnen Marken zusammengesetzt sein können. Der Absolutwert jeder Referenzmarke bestimmt sich aus dem jeweiligen spezifischen Abstand zu genau einer benachbarten Referenzmarke, wobei diese unterschiedlichen Abstände zwischen den benachbarten Referenzmarken durch die Abtastung der Inkrementspur ermittelt werden. Zu Identifizierung der einzelnen identischen Referenzmarken muß die jeweils zu erfassende sowie eine benachbarte Referenzmarke abgetastet und deren gegenseitiger spezifischer Abstand in Einheiten der Inkrementspur ermittelt und zusammen mit der Meßrichtungsinformation ausgewertet werden. Bei vertretbaren maximalen Abständen der Referenzmarken ist der Informationsgehalt einer so codierten Referenzspur begrenzt. Daraus folgt, daß diese Codierung nicht für beliebig lange Meßsysteme geeignet ist.

In der DE-A-3 617 254 wird ein Meßverfahren beschrieben, bei dem zur Bestimmung des Absolutwertes einer Referenzmarke mindestens zwei Abstände zwischen dieser Referenzmarke und zwei weiteren Referenzmarken ermittelt werden. Dieses vorbekannte Meßverfahren hat den Vorteil, daß ein wesentlich größerer Informationsgehalt in vertretbar kleinen Abständen über die Referenzmarken codiert werden kann. Die eindeutige Decodierung der unterschiedlichen Abstände ist jedoch aufwendig und die auftretende Zeitverzögerung zwischen dem rechentechnischen Bestimmen der zwei Abstände zu dieser Referenzmarke und der Zuordnung der Absolutposition zu dieser gleichen Referenzmarke ist relativ groß und kann die zulässige Verfahrgeschwindigkeit einschränken.

Die DE-A-3 324 004 beschreibt ein Meßverfahren, bei dem analog zur DE-A-2 416 212 die Bestimmung des Absolutwertes einer Referenzmarke mittels der Decodierung des jeweiligen spezifischen Abstandes zu einer benachbarten Referenzmarke erfolgt. Zur Vergrößerung des Codierumfangs wird hier zusätzliche eine weitere parallele Referenzmarkenspur eingeführt, die parallel abgetastet und ausgewertet werden muß.

Allen angeführten Meßverfahren haften jedoch die folgenden Mängel an:

Die Ermittlung des Absolutwertes der jeweils zu erfassenden Referenzmarke müßte zeitgleich mit dem Abtasten der Referenzmarke durch die Abtasteinheit beim Überfahren erfolgen. Für die Decodierung der Abstände und die Bereitstellung der abgespeicherten Absolutwerte in der Auswerteinrichtung ist jedoch eine endliche Zeit erforderlich, insbesondere dann, wenn zur Decodierung Mikrorechner eingesetzt werden sollen. Bei großen Verfahrgeschwindigkeiten wäre die bereitgestellte Absolutposition nicht mehr identisch mit der tatsächlichen Position.

Für Anwendungsfälle, bei denen die Absolutpositionen, die als metrologisches Raster gelten, mit variablen Fehlerkomponenten (wie z.B. Temperaturfehler oder belastungsabhängige Deformationsanteile) mittels Mikrorechnern korrigiert werden sollen, steht keine ausreichende Zeit für diese Korrekturrechnung zur Verfügung.

### Beschreibung der Erfindung

Ziel der Erfindung ist es, den Gebrauchswert eines Längenmeßsystems, das mit einem Mikrorechner arbeitet, durch Erhöhung der Meßsignalverarbeitungsgeschwindigkeit zu verbessern.

Der Erfindung liegt daher die Aufgabe zugrunde, ein Meßverfahren für ein quasi-absolutes inkrementales Längenmeßsystem anzugeben, bei dem ein Teilungsträger mit abstandscodierten Referenzmarken einer Referenzmarkenspur abgestastet wird und das eine ausreichende Zeit zwischen dem Erkennen des Abstandscodes der Referenzmarken und dem Bereitstellen der Absolutposition zur Decodierung und für Korrekturrechnungen gewährleistet.

Diese Aufgabe wird erfindungsgemäß bei einem Verfahren der eingangs genannten Art dadurch gelöst, daß an einer Abgabeposition der Zählspur, die um einen ganzzahligen Zählbetrag zₒ≧ 1 in Verfahrrichtung gegenüber einer zu erfassenden Position versetzt ist, von der Auswerteinrichtung ein Übergabewert an die Anzeigeeinrichtung als aktuelle Position der Meßanordnung übergeben wird, der den Absolutwert der zu erfassenden Position und den Zählbetrag enthält, und daß der Zählbetrag der Abgabeposition zur Übergabe des in der Auswerteinrichtung decodierten Absolutwertes gegenüber dem letzten Codeimpuls anhand der Zählsignale in der Zählspur ermittelt wird.

Bevorzugt ist der Zählbetrag in der Auswerteinrichtung wählbar. Eine weitere vorteilhafte Ausgestaltung des erfindungsgemäßen Verfahrens liegt auch darin, daß der Übergabewert von der Auswerteinrichtung an die Anzeigeeinrichtung einen zusätzlichen Korrekturwert zur Berücksichtigung variabler Fehlerkomponenten, wie z.B. von Temperaturfehlern oder belastungsabhängigen Deformationsanteilen, enthält.

Der Zählbetrag kann einerseits bei bekannter maximaler Abtastgeschwindigkeit und der maximal benötigten Zeit für die Decodierung des Codes, für Hilfsoperationen (wie z.B. aktuelle Temperaturkorrekturen der zu erfassenden Position) und für die Absolutwertbereitstellung in der Auswerteinrichtung als Konstante eingestellt werden, die sich aus dem Produkt von maximaler Abtastgeschwindigkeit und der benötigten Zeit bis zur Absolutwertbereitstellung ergibt. Andererseits kann die Anordnung selbst elektronische Mittel enthalten, die nach Abschluß von Decodierung, Hilfsoperationen und Absolutwertbereitstellung den jeweils aktuellen Zählbetrag bestimmen.

Der Zählbetrag zₒ ist in Abhängigkeit von der Verfahrrichtung als positiver oder negativer Zählbetrag zu werten.

Bei dem erfindungsgemäßen quasi-absoluten inkrementalen Längenmeßverfahren steht die erforderlich Zeit für die Decodierung, für Hilfsoperationen und für die Absolutwertbereitstellung zur Verfügung, die für die relative Verschiebung der Abtasteinrichtung vom Moment der Abtastung der letzten zum abstandscodierten Code gehörenden Referenzmarke an von den zₒ Inkrementen der Zählspur benötigt wird. Je nach der Hard- und/oder Softwareausstattung der Auswerteinrichtung kann der Zählbetrag zₒ bei vorgegebener maximaler Relativbewegung zwischen Teilungsträger und Abtasteinrichtung ohne Schwierigkeit so gewählt werden, daß die erforderliche Zeit für die Decodierung, für Hilfsoperationen und für die Absolutwertbereitstellung zur Verfügung steht.

Das erfindungsgemäße Verfahren ermöglicht es, daß bei einem quasi-absoluten inkrementalen Längenmeßsystem die den Positionen der Zählspur zugeordneten Absolutwerte ohne Zeitverzögerung bereitgestellt werden und auch bei hohen Verfahrgeschwindigkeiten identisch mit den tatsächlichen Positionen sind. Weiterhin sind den absoluten Positionen aktuelle variable Fehlerkomponenten zuordenbar, ohne das dynamische Verhalten des Meßsystems zu beeinflussen.

Aufgrund der erfindungsgemäß zur Verfügung gestellten Zeitspanne zwischen der Codeerkennung und der Bereitstellung der Absolutwerte sind vor allem auch für die Decodierung von Doppelcodes und für zusätzliche Korrekturrechnungen als besonders wirtschaftliche Lösungen Mikrorechner einsetzbar.

### Kurze Beschreibung der Zeichnungen

Die Erfindung wird nachfolgend anhand der Zeichnung im Prinzip beispielshalber noch näher erläutert. Es zeigen:
**Fig. 1** einen bei einem erfindungsgemäßen Verfahren einsetzbaren Teilungsträger mit einer einfach-codierten Referenzspur, und
**Fig. 2** die Anordnung der Abtastelemente in einer Abtasteinrichtung zum Abtasten eines Teilungsträgers nach Fig. 1.

### Ausführliche Beschreibung der Zeichnungen

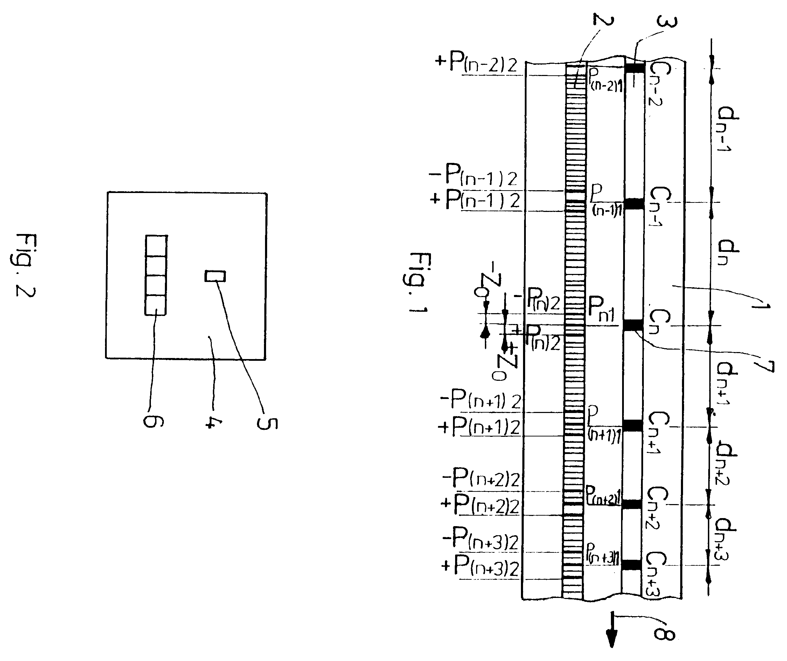

In Fig. 1 ist zu einem quasi-absoluten inkrementalen Längenmeßsystem, mit dem das erfindungsgemäße Verfahren durchgeführt werden kann, nur ein Teilungsträger 1 dargestellt, der aus einem Metall- oder einem Kunststoffband oder aus einem Glaskörper bestehen kann. Ferner ist eine Rasterteilung und eine eine Referenzmarkenspur 3 mit Codemarken 7 abtastende photoelektrische Abtasteinrichtung (in den Figuren nicht dargestellt) vorgesehen, die mit einer Auswerteinrichtung verbunden ist, welche elektrische Absolutwertesignale erzeugt. Die Rasterteilung 2 und die Referenzmarkenspur 3 sind auf dem Teilungsträger 1 angeordnet. Eine in Fig. 2 dargestellte Abtastplatte 4 einer solchen Abtasteinrichtung umfaßt eine Marke 5 zum Abtasten der Referenzmarkenspur 3 und ein Gegengitter 6 mit vier um 90° phasenverschobenen Bereichen zum Abtasten der Rasterteilung 2.

Die in Fig. 1 gezeigte Referenzmarkenspur 3 ist einfach-codiert. Die Information über die Position Pₙ₁ ist für den Fall der Vorwärtsbewegung in Teilungsrichtung 8 in den Codemarken Cₙ und Cₙ₋₁ bzw. in deren Abstand dₙ enthalten, wobei dieser Abstand anhand der Rasterteilung 2 mittels der von ihr abgeleiteten Zählsignale ermittelt wird.

Für ein ausgewähltes Beispiel sollen folgende Parameter vorgegeben sein:
* Inkrement der Zählspur: 1 µm;
* maximale Relativgeschwindigkeit (Abtastgeschwindigkeit) zwischen Rasterteilung und Abtasteinrichtung: 1 m/sec;
* maximal benötigte Zeit für die Decodierung, für Hilfsoperationen, wie z.B. aktuelle Temperaturkorrekturen der Positionen Pₙ, und für die Absolutwertbereitstellung in der Auswerteinrichtung: 0,5 m/sec.

Aus dem Produkt von maximaler Abtastgeschwindigkeit und der benötigten Zeit für die Absolutwertbereitstellung ergibt sich als Zählbetrag zₒ zu 500 µm.

Dieser Zählbetrag von zₒ = 500 µm - entsprechend 500 Zähleinheiten der Zählspur - wird als Konstante in der Auswerteinrichtung eingestellt.

Beim Erreichen der Position +Pₙ₂, die um zₒ von der zu erfassenden Position Pₙ₁ abweicht, wird von der Auswerteinrichtung ein Übergabewert an die Anzeigeeinrichtung als aktuelle Position der Meßanordnung übergeben, der den Absolutwert der zu erfassenden Position Pₙ₁, den Zählbetrag zₒ von +500 µm und gegebenenfalls einen zusätzlichen Korrekturwert enthält.

Der Zählbetrag zₒ der Abgabeposition +Pₙ₂ zur Übergabe des in der Auswerteinrichtung decodierten und gegebenenfalls korrigierten Absolutwertes Pₙ₁ gegenüber dem Codeimpuls Cₙ wird anhand der Zählsignale in der Zählspur ab der zu erfassenden Position Pₙ₁ ermittelt.

Für den Fall der Rückwärtsbewegung ist die Information für die zu erfassende Position Pₙ₁ in den Codemarken Cₙ₊₁ und Cₙ bzw. in deren Abstand dₙ₊₁ enthalten.

Vorteilhaft ist es, daß z.B. bei einer Vorwärtsbewegung nach Passieren der Abtasteinrichtung über Cₙ₋₁ und Cₙ die Abstandsinformation decodiert werden kann, für diese Decodierung und die Absolutwertbereitstellung von Pₙ₁ und gegebenenfalls für weitere Korrekturrechnungen in einem Prozessor Zeit zur Verfügung steht und der berechnete und korrigierte Absolutwert für +Pₙ₂ verfügbar ist, bevor diese Position +Pₙ₂ erreicht wird, und daß beim Erreichen dieser Position der Absolutwert sofort für die Anzeigeeinrichtung zur Verfügung steht.

Als Abtasteinrichtung läßt sich jede Einrichtung, die zur Abtastung der Referenzmarkenspur 3 geeignet ist, verwenden. In der Praxis wird jedoch bevorzugt eine auf photoelektrischer Grundlage arbeitende Abtasteinrichtung eingesetzt, die relativ zum Teilungsträger verschiebbar angeordnet ist. Sie umfaßt im allgemeinen eine Lichtquelle zur Beleuchtung der Abtastplatte und der Teilung des Teilungsträgers 1, wobei gegebenenfalls auch noch eine Abbildungsoptik vorgesehen sein kann, mit der die Fenster der Abtastplatte und die Teilungen des Teilungsträgers 1 auf in der Abtasteinrichtung vorhandene photoelektrische Empfänger abgebildet werden können, welche die elektrischen Abtastsignale zur Ermittlung der zu erfassenden Position erzeugen.

## Patentansprüche

1. Verfahren zum Messen von Längen, bei dem ein Teilungsträger (1), der eine Rasterteilung (2) mit einer Zählspur und Referenzmarken (7) mit unterschiedlichen Abständen (dₙ₋₁, dₙ, ..., dₙ₊₃) in mindestens einer anderen Spur (3) aufweist, von einer Abtasteinrichtung abgetastet wird, wobei die Abtastsignale in einer Auswerteinrichtung und einer Anzeigeeinrichtung weiterverarbeitet werden, und bei dem die unterschiedlichen Abstände (dₙ₋₁, dₙ, ..., dₙ₊₃) der Referenzmarken (7) zueinander durch Abtasten der Rasterteilung (2) in Zähleinheiten der Zählspur ermittelt werden, wobei aus diesen Abstandssignalen Informationen in codierter Form über die Absolutwerte der Position der Referenzmarken (7) gewonnen werden, **dadurch gekennzeichnet,** daß an einer Abgabeposition (Pₙ₂) der Zählspur, die um einen qanzzahligen Zählbetrag (zₒ ≧ 1) in Verfahrrichtung gegenüber einer zu erfassenden Positiön (Pₙ₁) versetzt ist, von der Auswerteinrichtung ein Übergabewert an die Anzeigeeinrichtung als aktuelle Position der Meßanordnung übergeben wird, der den Absolutwert der zu erfassenden Posiion (Pₙ₁) und den Zählbetrag (zₒ) enthält, und daß der Zählbetrag (zₒ) der Abgabeposition (Pₙ₂) zur Übergabe des in der Auswerteinrichtung decodierten Absolutwertes gegenüber dem letzten Codeimpuls anhand der Zählsignale in der Zählspur ermittelt wird.

2. Verfahren nach Anspruch 1, dadurch gekennzeichnet, daß der Zählbetrag (zₒ) in der Auswerteinrichtung wählbar ist.

3. Verfahren nach Anspruch 1 oder 2, dadurch gekennzeichnet, daß der Übergabewert von der Auswerteinrichtung an die Anzeigeeinrichtung einen zusätzlichen Korrekturwert enthält.

## Claims

1. Method of measuring lengths in which a graduation carrier (1), which has a raster graduation (2) with a counting track and reference marks (7) with different spacings (dₙ₋₁, dₙ, ..., dₙ₊₃) in at least one other track (3), is scanned by a scanning device, whereby the scanning signals are further processed in an evaluation device and an indicating device, and in which the different spacings (dₙ₋₁, dₙ, ..., dₙ₊₃) of the reference marks (7) from one another are determined by scanning the raster graduation (2) in counting units of the counting track, whereby information in coded form about the absolute values of the position of the reference marks (7) is obtained from these spacing signals, characterised in that a transmission value is transmitted at an output position (Pₙ₂) of the counting track, which is offset by a whole number counting amount (zₒ≧1) in the direction of movement with respect to a position (Pₙ₁) to be determined, from the evaluation device to the indicating device as the actual position of the measuring apparatus, which transmission value includes the absolute value of the position (Pₙ₁) to be determined and the counting amount (zₒ), and that the counting amount (zₒ) of the output position (Pₙ₂) for transmission of the absolute value decoded in the evaluation device with respect to the last code pulse is determined with reference to the counting signals in the counting track.

2. Method as claimed in Claim 1, characterised in that the counting amount (zₒ) in the evaluation device is selectable.

3. Method as claimed in Claim 1 or 2, characterised in that the transmission value from the evaluation device to the indicating device includes an additional correction value.

## Revendications

1. Procédé de mesure de longueurs dans lequel un support de graduation (1), qui présente une graduation (2) avec une piste de comptage et des marques de référence (7) avec des écartements différents (dₙ₋₁, dₙ, ..., dₙ₊₃) dans au moins une autre piste (3), est balayé par un dispositif de balayage, les signaux de balayage étant traités dans un dispositif d'exploitation et un dispositif d'affichage, et dans lequel les écartements différents (dₙ₋₁, dₙ, ..., dₙ₊₃) des marques de référence (7) sont déterminés, par balayage de la graduation (2), en unités de comptage de la piste de comptage, des informations sous forme codée relatives aux valeurs absolues de la position des marques de référence (7) étant obtenues à partir de ces signaux d'écartement, caractérisé en ce qu'en une position de sortie (Pₙ₂) de la piste de comptage, qui est décalée d'une valeur de comptage en nombre entier (zₒ ≧ 1) dans le sens du déplacement par rapport à une position (Pₙ₁) à détecter, une valeur de transfert est transférée du dispositif d'exploitation au dispositif d'affichage en tant que position actuelle du dispositif de mesure, laquelle valeur de transfert contient la valeur absolue de la position (Pₙ₁) à détecter et la valeur de comptage (zₒ), et en ce que la valeur de comptage (zₒ) de la position de sortie (Pₙ₂) est déterminée, pour le transfert de la valeur absolue décodée dans le dispositif d'exploitation, par rapport à la dernière impulsion de code, à l'aide des signaux de comptage, dans la piste de comptage.

2. Procédé selon la revendication 1, caractérisé en ce que la valeur de comptage (zₒ) peut être sélectionnée dans le dispositif d'exploitation.

3. Procédé selon les revendications 1 ou 2, caractérisé en ce que la valeur de transfert du dispositif d'exploitation au dispositif d'affichage, contient une valeur de correction supplémentaire.
